# EUROPÄISCHE PATENTSCHRIFT

(11) **EP 1 430 229 B1**
(45) Veröffentlichungstag und Bekanntmachung des Hinweises auf die Patenterteilung: **30.11.2005**
(21) Anmeldenummer: 02777017.1
(22) Anmeldetag: 06.09.2002
(51) Int. Cl.: F16B 37/06

(54) **BEFESTIGUNGSELEMENT**
FIXING ELEMENT
ELEMENT DE FIXATION

(30) Priorität: 25.09.2001 DE 10147076
(43) Veröffentlichungstag der Anmeldung: 23.06.2004
(73) Patentinhaber: Profil Verbindungstechnik GmbH & Co. KG, 61381 Friedrichsdorf (DE)
(72) Erfinder: BABEJ, Jiri, 35423 Lich (DE); HUMPERT, Richard, 61191 Rosbach v.d.H. (DE); RATTEI, Ines, 01159 Dresden (DE)
(74) Vertreter: Manitz, Finsterwald & Partner GbR
(86) Internationale Anmeldenummer: PCT/EP2002/010001
(87) Internationale Veröffentlichungsnummer: WO 2003/029667

(56) Entgegenhaltungen:
- DE-A- 3 446 978
- DE-A- 3 835 566
- GB-A- 2 152 862

## Beschreibung

Die vorliegende Erfindung betrifft ein Befestigungselement mit einem Befestigungsabschnitt und einem rohrförmigen Stanz- und/ oder Nietabschnitt, wobei der Stanz- und/oder Nietabschnitt zur Anbringung des Befestigungselements an ein Blechteil ausgelegt ist und der Befestigungsabschnitt zur Anbringung eines Gegenstandes an das Blechteil ausgelegt ist, wobei im Bereich des Übergangs vom Befestigungsabschnitt in den Stanz- und/oder Nietabschnitt eine sich radial und/oder konusförmig erstreckende Anlagefläche vorgesehen ist, die gegebenenfalls Verdrehsicherungsmerkmale aufweist und der rohrförmige Stanz- und/oder Nietabschnitt an seinem freien Stirnende auf der radial inneren Seite eine konusförmige, in Richtung des freien Stirnendes divergierende Schräg- bzw. Schneidfläche und auf der radial äußeren Seite eine gerundete Stoß- und Ziehfläche aufweist, wobei die Schräg- bzw. Schneidfläche und die Stoß- und Ziehfläche sich an einer ringförmigen Stirnkante am freien Stirnende des Stanz- und/oder Nietabschnitts treffen.

Befestigungselemente dieser Art werden von der Firma Profil Verbindungstechnik GmbH & Co. KG in verschiedenen Formen unter den Bezeichnungen SBF, SBK, RSF und RSK seit vielen Jahren vertrieben. Die Elemente selbst sowie die Verfahren zur Anbringung der Elemente und die verwendeten Matrizen sind unter anderem in dem deutschen Patenten DE 34 47 006 C2, DE 34 46 978 C2 und DE 38 35 566 C2 im Detail beschrieben.

Befestigungselemente dieser Art werden entweder selbststanzend im Blechteil eingebracht, so dass das Element einen Stanz- und/oder Nietabschnitt aufweist. Sie können aber auch in vorgelochte Bleche eingebracht werden, wobei die Vorlochung häufig unter Anwendung eines sogenannten vorläufigen Lochstempels erfolgt, der das Blechteil unmittelbar vor bzw. während der Anbringung des Befestigungselements locht. Diese Möglichkeit besteht nur bei Befestigungselementen, die als Hohlkörperelement, beispielsweise Mutterelemente, ausgebildet sind, da der Lochstempel das Befestigungselement durchdringen muss.

Es besteht auch die Möglichkeit, ebenfalls mit Hohlkörperelementen, diese mit einem Stanz- und Nietabschnitt zu versehen, das Blechteil mit dem Stanz- und/oder Nietabschnitt zu lochen und den so entstandenen Butzen, der sich innerhalb des Rohr- und Nietabschnittes einklemmt, mit einem nachlaufenden Ausstoßstift wieder zu entfernen.

Auch bei Anwendung der o.g. Elemente mit vorgelochten Blechen muß der Stanz- und/ oder Nietabschnitt eine nicht unerhebliche Verformungsarbeit am Blechteil leisten, da er im Bereich der Vernietung dafür sorgen muss, dass das Blechteil zu einem rohrförmigen Kragen verformt wird. Der Stanz- und/oder Nietabschnitt wird anschließend um das freie Stirnende des rohrförmigen Kragens radial nach außen verformt, um eine im radialen Querschnitt gesehene U-förmige Aufnahme für den rohrförmigen Kragen zu bilden.

Die Forderungen an den Stanz- und/oder Nietabschnitt, egal, ob mit oder ohne Vorlochung gearbeitet wird, sind somit einerseits ausreichende Stabilität aufzuweisen, um die notwendige Verformungsarbeit leisten zu können und nach der Bildung des Nietbördels eine ausreichende Festigkeit im Bereich des Nietbördels zu erreichen, damit die angestrebte Festigkeit der Verbindung gewährleistet ist. Dies ist für die feste Anbringung eines Gegenstands an das Blechteil erforderlich. Bei einem Befestigungselement bedeutet dies darüberhinaus, dass die Festigkeit des Stanzund/ oder Nietabschnitts der Festigkeitsklasse der Schraube entsprechen muss. Bei der Anbringung des Befestigungselements an das Blechteil darf der Stanz- und /oder Nietabschnitt nicht knicken. Andererseits muß die Verformbarkeit so gegeben sein, dass der Stanz- und/ oder Nietabschnitt zu dem im radialen Querschnitt U-förmigen Nietbördel umgeformt werden kann.

Diese gegenläufigen Forderungen führen dazu, dass die radiale Wanddicke des rohrförmigen Stanz- und/ oder Nietabschnitts eine klare Zuordnung zu der effektiven Größe des Befestigungsabschnitts haben muß. Unter der Bezeichnung "effektive Größe des Befestigungsabschnitts" ist die Festigkeit, die vom Befestigungselement als solches verlangt wird, zu verstehen. Wenn es sich beim Befestigungselement beispielsweise um ein Bolzenelement handelt, entspricht die effektive Größe des Befestigungsabschnitts dem Außendurchmesser des Gewindezylinders, d.h. bei einem Befestigungselement mit einem metrischen Gewinde von 5 mm Durchmesser beträgt die effektive Größe des Befestigungsabschnitts ebenfalls 5 mm. Bei einem Befestigungselement mit einem Gewindezylinder von 6 mm Durchmesser beträgt die effektive Größe des Befestigungsabschnitts 6 mm usw. Wenn es sich um ein Mutterelement handelt, ist die effektive Größe genauso bestimmt, d.h. bei einem Mutterelement von beispielsweise 8 mm Innendurchmesser ist die effektive Größe des Befestigungsabschnitts als 8 mm anzunehmen. Sollte es sich dagegen um ein Bolzenzelement handeln, das mit einem Schaftteil versehen ist und eine Lagerfunktion ausübt oder zur Aufnahme einer Federklammer oder zur Bildung einer Schnappverbindung beschaffen ist, gilt der Außendurchmesser des Schaftteils als die effektive Größe. Beispielsweise mit einem Schaftteil mit einem Durchmesser von 10 mm beträgt die effektive Größe des Befestigungsabschnitts 10 mm.

Auch die Form der konusförmigen, in Richtung des freien Stirnendes divergierenden Schneidfläche und der auf der radial äußeren Seite des Stanz- und/oder Nietabschnitts vorgesehenen gerundete Stoß- und Ziehfläche sind bei den bekannten Befestigungselementen .sehr genau vorgegeben worden, um den jeweiligen Aufgaben gerecht zu werden.

Bei den bekannten Elementen wurde die Schneidfläche als konusförmige Fläche ausgebildet, die die Hypotenuse eines gedachten rechteckigen Dreiecks aufweist mit einer Schenkellänge senkrecht zur mittleren Längsachse des rohrförmigen Stanz- und/oder Nietäbschnitts von, je nach effektiver Größe des Befestigungsabschnitts, 0,2 mm bis 0,3 mm. Sinn dieser konusförmigen Schneidfläche ist es einerseits bei der Herstellung des Stanzbutzens diesen in radialer Richtung zu komprimieren, so dass der Stanzbutzen im Stanz- und/oder Nietabschnitt eingeklemmt ist. Diese Einklemmung versteift den Stanz- und/oder Nietabschnitt während der nachfolgenden Verformung desselben, was von Vorteil ist. Andererseits dient die konusförmige Schneidfläche dazu, den Stanz- und/oder Nietabschnitt in Zusammenarbeit mit einem mittleren Teil der Matrize radial nach außen umzulenken. Beide Funktionen führen dazu, dass von der Auslegung her diese Schneidfläche möglichst breit ausgeführt wird.

Die gerundete Stoß- und Ziehfläche bei den bekannten Elementen hat einen Krümmungsmittelpunkt, der an der inneren Wandung des Stanzund/ oder Nietabschnitts platziert wurde, wobei der Krümmungsradius eine Länge aufweist, die der radialen Wanddicke des rohrförmigen Stanz- und/oder Nietabschnitts entspricht. Im übrigen wurde der Krümmungsmittelpunkt bei den bekannten Elementen so platziert, dass die gerundete Stoß- und Ziehfläche tangential in die zylindrische Außenfläche des rohrförmigen Stanz- und/oder Nietabschnitts einläuft, wobei an dem freien Stirnende des Befestigungselements diese gerundete Stoß- und Ziehfläche, die mit der Schneidfläche eine ringförmige Stirnkante am freien Stirnende des Stanz- und/oder Nietabschnitts bildet, diese Schneidfläche so trifft, dass eine Tangente zu der gerundeten Stoß- und Ziehfläche an der ringförmigen Stirnkante einen Winkel zur mittleren Längsachse des rohrförmigen Stanz- und/oder Nietabschnitts einen spitzen Winkel bildet, der deutlich weniger als 90° beträgt.

Selbst wenn die genannten Befestigungselemente in der Praxis erfolgreich seit mehreren Jahren im Einsatz sind, weisen sie einen Nachteil auf, nämlich, dass die Anbringung der Elemente, egal, ob mit oder ohne Vorlochung, zur Ausbildung von kleinen Spänen führt, die im Laufe der Zeit im Bereich der Matrizen oder anderswo in den verwendeten Werkzeugen bzw. Pressen festsitzen und zu Verklemmungen und Verformungen führen, auch von den bearbeiteten Blechteilen, die durchaus unerwünscht sind.

Die Ursache für diese kleinen Späne ist äußerst schwierig nachzuvollziehen, da man das Entstehen der Späne in einer großen Presse nicht visuell betrachten kann, da der Arbeitsbereich aus massivem Metall besteht und es keine Möglichkeiten gibt, hier sozusagen Betrachtungsfenster vorzusehen, die es ermöglichen würden, das Herstellungsverfahren zu betrachten, ohne den Ablauf des Herstellungsverfahrens wesentlich zu beeinträchtigen.

Aufgabe der vorliegenden Erfindung ist es, eine modifizierte Form von Befestigungselementen der eingangs genannten Art anzugeben, die nicht bzw. in weitaus geringerem Maße zu der Bildung von Spänen führt, ohne dass die sonst bewährten Anbringungsverfahren (mit oder ohne Vorlochung) geändert werden müssen und ohne dass die technische Werte der erreichten Verbindungen verschlechtert werden, wobei es auch möglich sein soll die bisher eingesetzten Matrizen weiter zu verwenden.

Zur Lösung dieser Aufgabe wird erfindungsgemäß vorgesehen, dass die konusförmige Schräg-bzw. Schneidfläche die Hypotenuse eines gedachten reckeckigen Dreiecks bildet mit einer Schenkellänge senkrecht zur mittleren Längsachse des rohrförmigen Stanz- und/oder Nietabschnitts von 0,10 mm ± 0,03 mm, dass die radiale Wanddicke (R) des rohrförmigen Stanz- und/oder Nietabschnitts in als Funktion der effektiven Größe des Befestigungsabschnittes bemessen ist,
dass die gerundete Stoß- und Ziehfläche einen Krümmungsradius aufweist, der 0,1 mm ± 0,03 mm kleiner ist als die jeweilige radiale Wanddicke (R) und dass der Krümmungsmittelpunkt der gerundeten Stoß- und Ziehfläche an der Oberfläche eines gedachten achsparallelen Zylinders liegt, der sich von der ringförmige Stirnkante weg in Richtung des Befestigungsabschnittes erstreckt und an einer Stelle entlang des Stanzund/ oder Nietabschnittes an der Oberfläche des gedachten achsparallelen Zylinders so gelegt ist, dass eine Tangente zu der gerundeten Stoß- und Ziehfläche an der ringförmigen Stirnkante senkrecht zur mittleren Längsachse steht.

Besonders bevorzugte Ausführungsformen des Befestigungselements sind den Unteransprüchen zu entnehmen.

Trotz der Schwierigkeiten bei der Betrachtung des Verfahrens ist es gelungen festzustellen, dass die Späne im Prinzip drei Ursachen haben. Einerseits treten sie beim Durchschneiden des Blechteils auf. Sie treten aber auch dann auf, wenn das Blech in den rohrförmigen Kragen aufgezogen wird und sie treten ferner auf, während der Stanz- und/oder Nietabschnitt in die Vertiefung der Matrize um den gezogenen rohrförmigen Kragenbereich umgerollt wird.

Es ist ferner erfindungsgemäß festgestellt worden, dass durch eine besondere Formgebung des Stanz- und/oder Nietabschnitts im Bereich der konusförmigen Schneidfläche und der gerundeten Stoß- und Ziehfläche die Neigung zur Spanbildung wesentlich herabgesetzt werden kann und somit die Aufgabe der Erfindung gelöst werden kann.

Die Erfindung wird nachfolgend näher erläutert anhand der Zeichnungen, in welcher zeigen:
- Figuren 1 bis 12: die Figuren 7 bis 14 und 26 bis 29 aus dem deutschen Patent 34 47 006, die das Verfahren zur Anbringung von Befestigungselementen an Blechteilen in der bekannten Form zeigt, wobei sowohl ein Bolzenelement als auch ein Mutterelement gezeigt werden und bei dem Mutterelement ein Ausstoßstift zur Entfernung des Stanzbutzens zur Anwendung gelangt,
- Figuren 13 bis 18: die Figuren 7, 8 und 10 bis 13 der DE-PS 34 46 978 C2, die die Anbringung eines Mutterelementes unter Anwendung eines vorlaufenden Lochstempels zeigen,
- Figuren 19, 20: ein Befestigungselement in Form eines Bolzenelementes nach der vorliegenden Erfindung, und zwar in Form einer Stirnansicht und einer teilweise in Längsrichtung geschnittenen Seitenansicht und
- Figuren 21 - 24: die Ausbildung des Stanz- und Nietabschnittes im Bereich A der Fig. 20 in bemaßter Form für Bolzenelemente mit Durchmesser M5, M6, M8 bzw. M10.

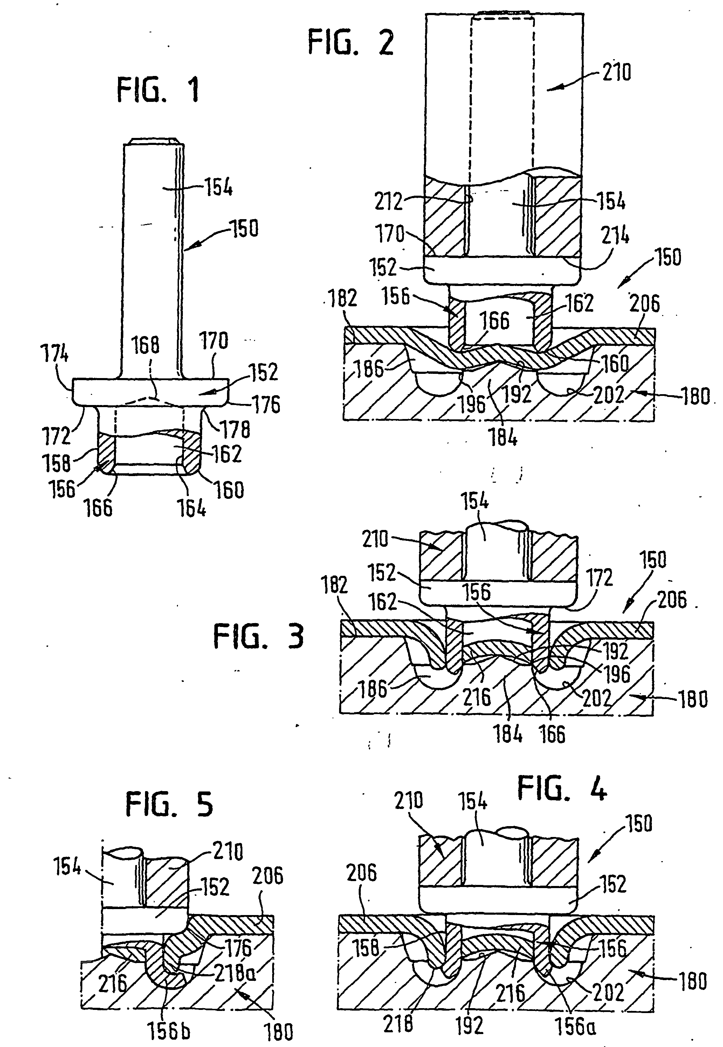

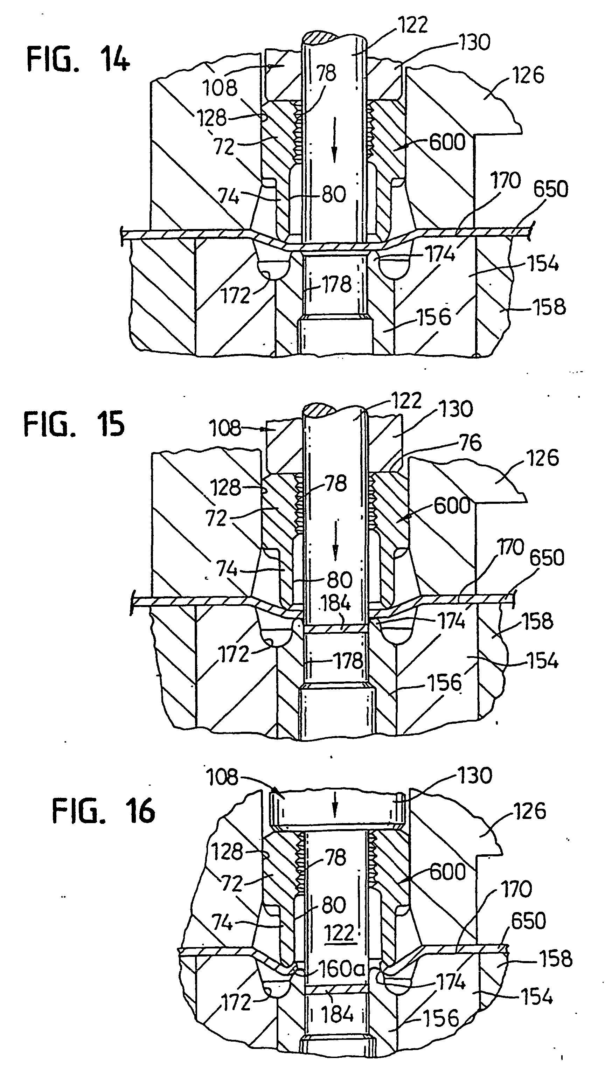

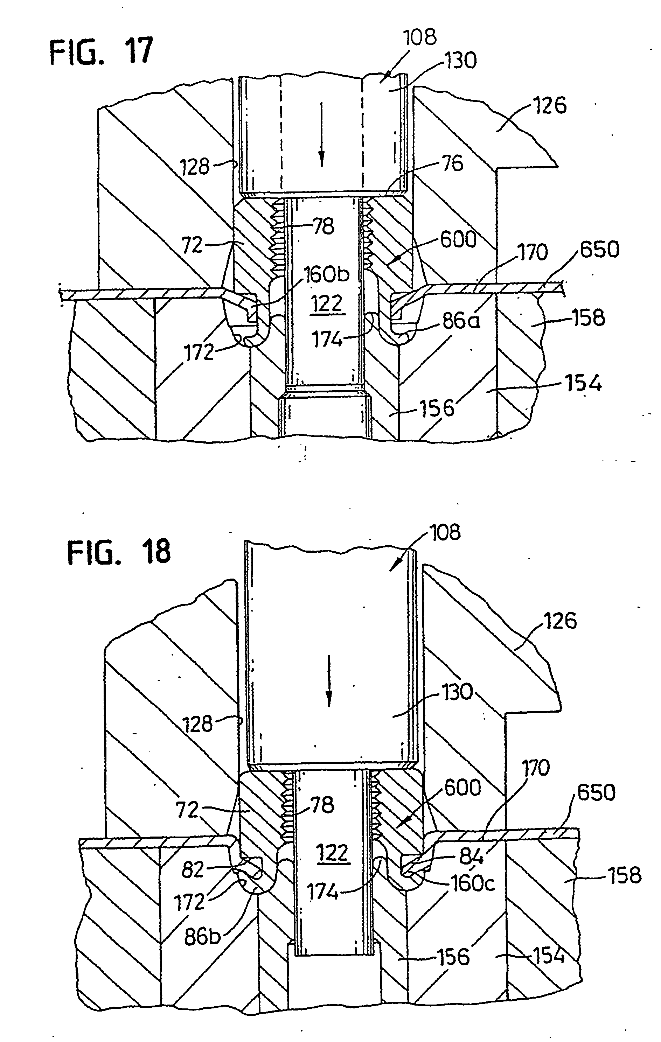

Da die Figuren 1 bis 12 bzw. 13 bis 18 den deutschen Patentschriften DE 34 47 006 C2 und DE 34 46 978 C2 entnommen sind und dort vollständig beschrieben sind, werden sie hier zur Erläuterung nur kurz beschrieben, zumal der Verfahrensablauf aus den einzelnen Zeichnungen ohne weiteres ersichtlich ist.

Es handelt sich bei dem Befestigungselement der Fig. 1 um ein Stehbolzenelement 150. Dieses Stehbolzenelemts 150 besteht aus einem Schaftteil 154, hier ohne Gewinde gezeigt, und einem Kopfteil 152 mit einem radialen Flansch und einem rohrförmigen Stanz- und Nietabschnitt 156. Bei dieser Ausführungsform ist die Mantelwandung 158 des rohrförmigen Stanz- und Nietabschnittes im wesentlichen kreiszylindrisch und endet in einer abgerundeten Stoß- und Ziehkante 160 am freien Stirnende des rohrförmigen Stanz- und Nietabschnittes.

Die Innenwandung 164 des rohrförmigen Stanz- und Nietabschnittes ist in dieser Ausführungsform ebenfalls im wesentlichen zylindrisch und endet in einer konischen Schneidfläche 166, die an einer ringförmigen Stirnkante am freien Stirnende des Stanz- und Nietabschnittes die gerundete Stoß- und Ziehkante 160 trifft.

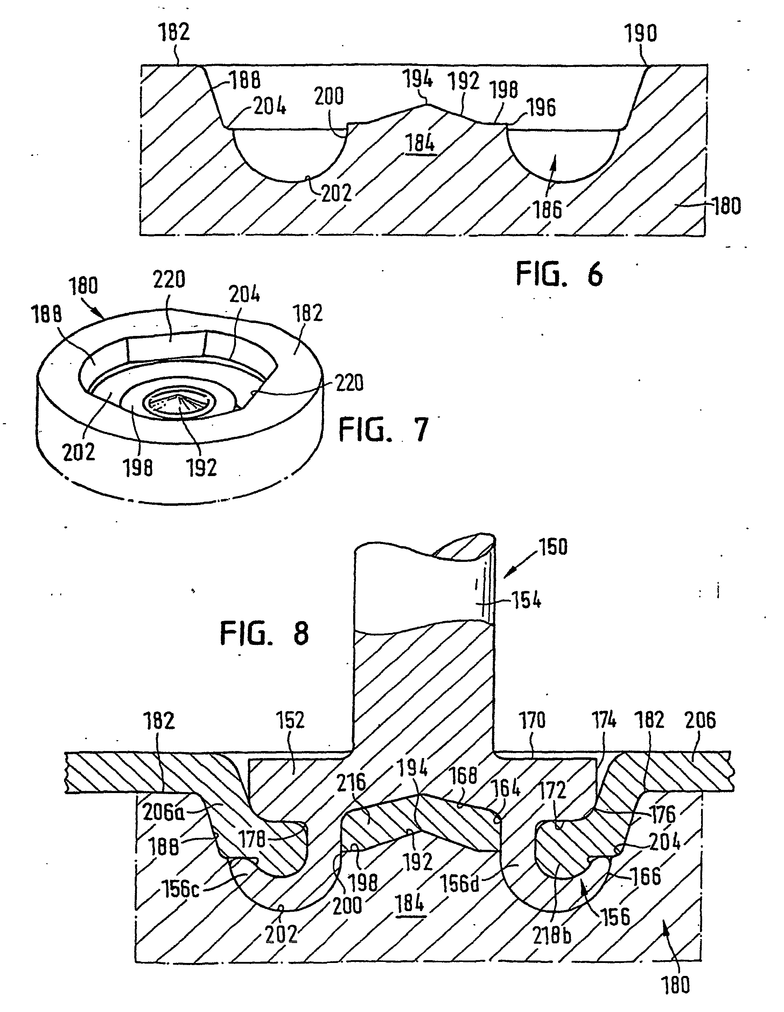

Wie aus der Fig. 2 ersichtlich wird in einem Presswerkzeug ein Blechteil 206 von einer Matrize 180 abgestützt und es wird mittels eines Presswerkzeuges 210 in Form des Stößels einer Presse das Befestigungselement 150 gegen das Blechteil 206 so gedrückt, dass, wie in Fig. 3 dargestellt, ein Stanzbutzen 216 entsteht und das Blechteil zu einem rohrförmigen Kragen 218 (Fig. 4) gezogen wird. Der Stanzbutzen 216 wird innerhalb des rohrförmigen Stanz- und Nietabschnittes durch einen Stempelansatz 184 der Matrize gedrückt und der Stanz- und Nietabschnitt 156 wird aufgrund der gerundeten Rollfläche 202 der Matrize 180 radial nach außen um das freie Stirnende des rohrförmigen Kragens 218 zur Bildung eines Nietbördels gerollt bis die Endposition gemäß Fig. 8 erreicht ist.

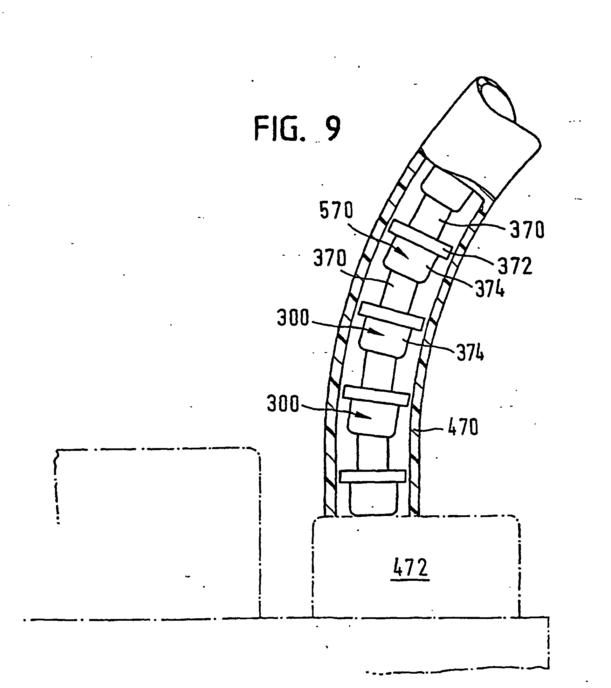

Die Fig. 9 zeigt wie mehrere Bolzenelemente hintereinander in einen Stanzkopf 472 einer Presse eingeführt werden können, damit bei jedem Hub der Presse ein Bolzenelement vom Stanzkopf in ein neues Blechteil eingestanzt und mit diesem vernietet werden kann. Selbst wenn die Fig. 7 eine besondere Formgebung der Matrize darstellt, kann diese auch die Form eines Rotationskörpers aufweisen, d.h. dass die dort gezeigten ebenen Prägebereiche 220 nicht vorhanden sein müssen.

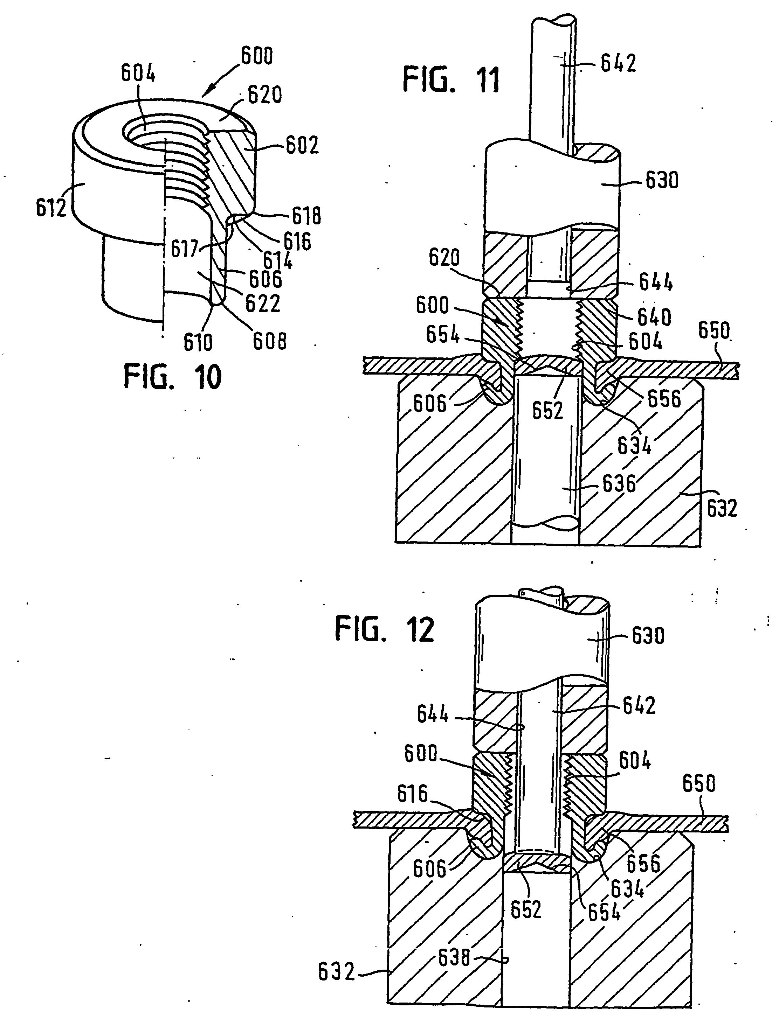

Die Fig. 10 bis 12 zeigen, dass ein Mutterelement anstelle eines Bolzenelementes zur Anwendung gelangen kann und zeigt weiterhin, wie bei dieser Ausführungsform das Mutterelement zwar selbststanzend in das Blechteil 650 eingebracht wird, der Stanzbutzen jedoch mittels eines Ausstoßstiftes 642 anschließend herausgedrückt und über einen mittleren Kanal 638 der Matrize 632 entsorgt wird.

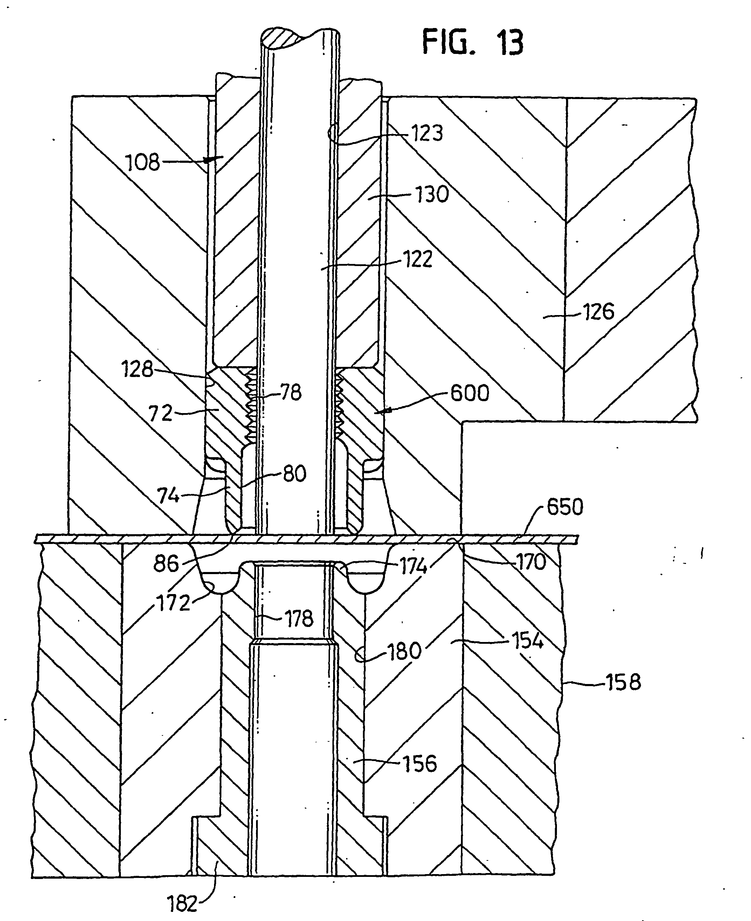

Die Fig. 13 bis 18 zeigen wie ein Mutterelement 600 in ein Blechteil 650 unter Anwendung eines sogenannten vorlaufenden Lochstempels 122, der der Vorlochung des Blechteils 650 dient, eingesetzt werden kann, so dass der Stanz- und Nietabschnitt hier eine stoßende und ziehende Funktion hat, nicht aber zum Durchstanzen des Blechteils herangezogen wird.

Unabhängig von der genauen Auslegung des Anbringungsverfahrens und vom verwendeten Befestigungselement sind alle gezeigten Befestigungselemente mit einem Stanz- und/oder Nietabschnitt versehen, der an seinem freien Stirnende auf der radial inneren Seite mit einer konusförmigen Schräg- bzw. Schneidfläche und auf der radial äußeren Seite mit einer gerundeten Stoß- und Ziehkante versehen ist, wobei die gerundete Stoß- und Ziehkante die konusförmige Schrägfläche an eine ringförmige Stirnkante des Stanz- und Nietabschnittes trifft.

Wie oben erläutert, handelt es sich bei der vorliegenden Erfindung um eine besondere Ausbildung des Stanz- und Nietabschnittes im Bereich seines freien Stirnendes, die die Vermeidung von Spänen sicherstellt.

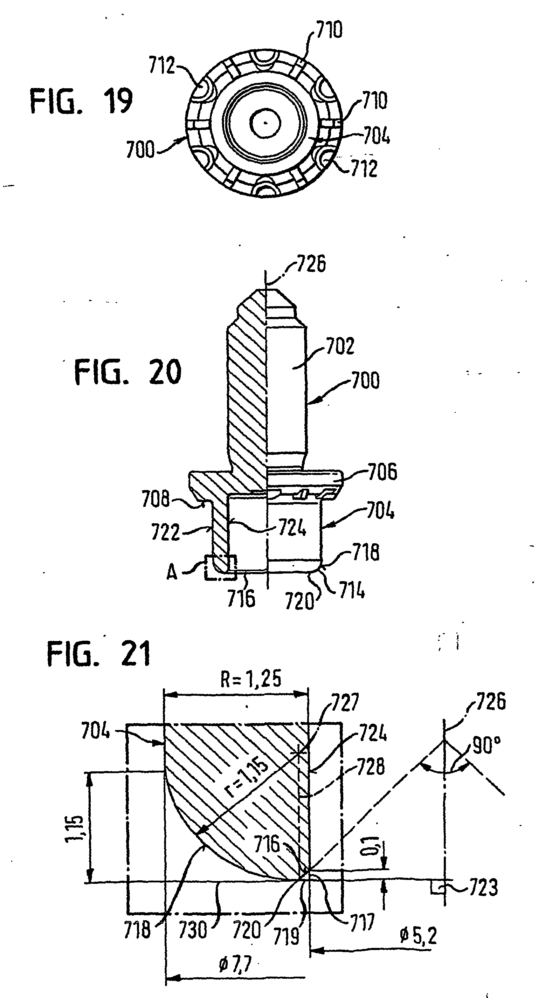

Es handelt sich bei dem Befestigungselement der Fig. 19 und 20 um ein Bolzenelement 700 mit einem Befestigungsabschnitt 702 und einem rohrförmigen Stanz- und/ oder Nietabschnitt 704, wobei der Stanz- und/oder Nietabschnitt zur Anbringung des Befestigungselements an einem Blechteil ausgelegt ist und der Befestigungsabschnitt zur Anbringung eines Gegenstandes an das Blechteil ausgelegt ist. Im Bereich des Überganges vom Befestigungsabschnitt 702 in den Stanz- und Nietabschnitt ist hier eine sich radial erstreckende, an einem Flanschteil 706 ausgebildete Anlagefläche 708 vorgesehen, die in diesem konkreten Beispiel mit Verdrehsicherungsmerkmalen in der Form von Nasen 710 und Vertiefungen 712 versehen ist. Verdrehsicherungsmerkmale müssen nur dann vorgesehen werden, wenn im Betrieb das Befestigungselement Drehmomente auf das Blechteil übertragen muss, beispielsweise dann, wenn ein Gegenstand am Blechteil mittels einer auf den Befestigungsabschnitt 702 aufgeschraubten Mutter befestigt werden soll, wobei beim Anschrauben der Mutter aufgrund von Reibung ein Drehmoment am Befestigungselement entsteht und vom Blechteil aufgefangen werden muss. Solche Drehmomente entstehen auch bei der Entfernung der Mutter und müssen ebenfalls von der Verbindung zwischen dem Befestigungselement und dem Blechteil getragen bzw. übertragen werden.

Der rohrförmige Stanz- und/oder Nietabschnitt weist an seinem freien Stirnende 714 auf der radial inneren Seite eine konusförmige Schneidfläche 716 und auf der radial äußeren Seite eine gerundete Stoß- und Ziehfläche 718 auf, wobei die Schneidfläche 716 und die Stoß- und Ziehfläche sich an einer ringförmigen Stirnkante 720 am freien Stirnende des Stanzund/ oder Nietabschnitts treffen.

Der rohrförmige Stanz- und/oder Nietabschnitt 704 weist eine kreiszylindrische Außenwand 722 und eine kreiszylindrische Innenwand 724 auf, die beide konzentrisch zur mittleren Längsachse 726 des Befestigungselements angeordnet sind.

Die erfindungsgemäße Ausbildung des rohrförmigen Stanz- und/oder Nietabschnitts 704 im Bereich seines freien Stirnendes, d.h. dort wo die Einzelheit A in Fig. 20 angedeutet wird, wird nunmehr anhand der Fig. 21 für ein Befestigungselement nach Fig. 20 mit einer effektiven Größe des Befestigungsabschnitts von 5 mm, d.h. der Außendurchmesser des Befestigungsabschnitts 702 beträgt 5 mm, beschrieben.

Aus der Figur 21 sieht man, dass die konusförmige Schneidfläche 716 in einem radialen Querschnitt betrachtet, die Hypotenuse eines gedachten gleichschenkligen, rechteckigen Dreiecks bildet, dessen gleich langen Schenkel mit den Bezugszeichen 717 und 719 bezeichnet sind. Der Schenkel 717 entspricht der gedachten Fortsetzung der inneren Wandung 724 des Stanz- und/oder Nietabschnitts 704 vom Anfang der Schräg- bzw. Schneidfläche 716 bis zu dem Schnittpunkt mit dem gedachten Radius, der von der ringförmigen Stirnkante 720 zu der Längsachse 726 geht, wobei der Abschnitt dieses Radius von der ringförmigen Stirnkante zu dem Schnittpunkt mit der gedachten Fortsetzung der inneren Wandung 724 des Stanz- und/ oder Nietabschnitts 704 den Schenkel 719 bildet. Die Schenkel 717 und 719 haben in diesem Beispiel jeweils eine Schenkellänge von 0,1 mm, wobei diese Schenkellänge erfindungsgemäß 0,1 mm ± 0,03 mm betragen kann. Da es sich hier vorzugsweise um ein gleichschenkliges Dreieck handelt, was aber nicht zwingend erforderlich ist, ist der Konuswinkel der konusförmigen Schneidfläche bezogen auf die mittlere Längsachse 726 90°. Der Abstand zwischen der ringförmigen Stirnkante 720 und der radial inneren Wandung 724 des rohrförmigen Stanz- und/oder Nietabschnitts beträgt (radialer Abstand gemessen an der ringförmigen Stirnkante 720) ebenfalls 0,1 mm.

Die radiale Wanddicke R des rohrförmigen Stanz- und/oder Nietabschnitts beträgt in diesem Beispiel eines Bolzenelementes der Größe M5 1,25 +/- 0.05 mm. Die gerundete Stoß- und Ziehfläche 718 weist erfindungsgemäß einen Krümmungsradius auf, der 0,1 mm (± 0,03mm) kleiner ist als die jeweilige radiale Wanddicke R (in diesem Beispiel 1,25 mm). Weiterhin liegt der Krümmungsmittelpunkt 727 der (kreisförmigen) gerundeten Stoß- und Ziehfläche an der Oberfläche eines gedachten achsparallelen Zylinders 728, der sich von der ringförmigen Stirnkante 720 weg in Richtung des Befestigungsabschnitts 702 erstreckt. Weiterhin ist der Krümmungsmittelpunkt 727 an einer Stelle entlang des Stanz- und/oder Nietabschnitts an der Oberfläche des gedachten achsparalleln Zylinders 728 so gelegt, dass die Tangente 730 zu der gerundeten Stoß- und Ziehfläche 718 beim Übergang in die ringförmige Stirnkante 720 senkrecht zur mittleren Längsachse des rohrförmigen Stanz- und/oder Nietabschnitts 704 steht, wie bei 723 angedeutet ist. Demnach beträgt die Höhe des Krümmungsmittelpunktes 727 oberhalb der ringförmigen Stirnkante 720 ebenfalls 1,15 mm entsprechend dem Krümmungsradius der gerundeten Stoß- und Ziehfläche 718.

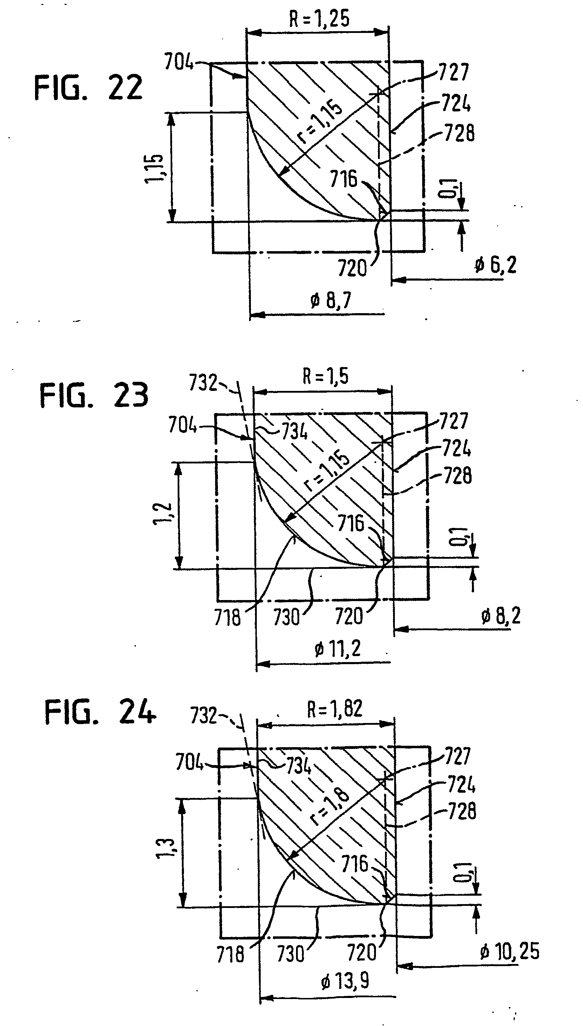

Aufgrund der geometrischen Verhältnisse führt diese Ausbildung des freien Endes des Stanz- und/oder Nietabschnitts 704 dazu, dass die gerundete Stoß- und Ziehfläche 718 ebenfalls tangential in die kreiszylindrische Auswandung des rohrförmigen Nietabschnitts einläuft. Dies gilt auch für die Ausführungsform gemäß Fig. 22, die die konkreten Abmessungen für ein erfindungsgemäßes Bolzenelement in der Größe M6 angeben, wo die radiale Wanddicke des Stanz- und/oder Nietabschnitts 704 ebenfalls 1,25 mm beträgt.

Man sieht aber aus den Figuren 23 und 24, dass die Verhältnisse bei einem Bolzenelement der Größe M8 oder M10 anders sind, so dass hier eine Tangente 732 zu der gerundeten Stoß- und Ziehfläche 718 des Stanz- und/oder Nietabschnitts 704 einen spitzen Winkel mit einer Generatrix 734 der kreisförmigen zylindrischen Auswandung 722 des Stanz- und/oder Nietabschnitts 704 bildet. Es ist erfindungsgemäß festgestelltworden, dass diese Tatsache für die Erfindung nicht störend ist bzw. auch zu einer Herabsetzung der Erzeugung von Spänen beiträgt.

Da die Figuren 22, 23 und 24 der Figur 21 bis auf die konkreten Abmessungen entsprechen, ist es nicht notwendig, diese Figuren getrennt zu beschreiben. Stattdessen sind die gleichen Bezugszeichen in den Figuren 22, 23 und 24 eingefügt worden wie in der Figur 21 und die Beschreibung der Figur 21 ist stellvertretend für die Figuren 22, 23 und 24 zu betrachten. Alle Abmessungen sind in den Zeichnungen enthalten und in mm angegeben und daher der Zeichnung einwandfrei zu entnehmen.

Es wird ferner darauf hingewiesen, dass die genaue Form des freien Stirnendes des Stanz- und/oder Nietabschnitts 704 auch für alle Befestigungselemente gilt, die von dieser Anmeldung erfasst werden, darunter auch Elemente der Bezeichnung SBF, SBK; RSF und RSK und bei allen möglichen Anwendungen der beanspruchten Befestigungselementen (auch die oben beschriebenen Anwendungen als Lagerung oder Klippaufnahme oder zur Ausbildung einer Schnappverbindung) gelten und für diese Arten von Element verwendet werden können, wenn es darum geht, Späne zu vermeiden.

Bei allen Ausführungsformen können auch als Beispiel für den Werkstoff der Funktionselemente alle Materialien genannt werden, die für die bestehende SBF-, SBK-, RSF- und RSK-Elemente verwendet werden. Solche Materialien umfassen Legierungen, die im Rahmen der Kaltverformung die Festigkeitswerte der Klasse 8 gemäß Isostandard erreichen, beispielsweise eine 35B2-Legierung gemäß DIN 1654. Die so gebildeten Befestigungselemente eigenen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für die Funktionselemente benutzt werden, z.B. AlMg5. Auch kommen Funktionselemente aus höherfesten Magnesiumlegierungen wie bspw. AM50 in Frage.

## Patentansprüche

1. Befestigungselement (700) mit einem Befestigungsabschnitt (702) und einem rohrförmigen Stanz- und/oder Nietabschnitt (704), wobei der Stanz- und/ oder Nietabschnitt zur Anbringung des Befestigungselements an ein Blechteil ausgelegt ist und der Befestigungsabschnitt zur Anbringung eines Gegenstandes an das Blechteil ausgelegt ist, wobei im Bereich des Übergangs vom Befestigungsabschnitt (702) in den Stanz- und/ oder Nietabschnitt eine sich radial und/ oder konusförmig erstreckende Anlagefläche (708) vorgesehen ist, die gegebenenfalls Verdrehsicherungsmerkmale (710, 712) aufweist und der rohrförmige Stanz- und/oder Nietabschnitt an seinem freien Stirnende (714) auf der radial inneren Seite eine konusförmige, in Richtung des freien Stirnendes divergierende Schräg- bzw. Schneidfläche (716) und auf der radial äußeren Seite eine gerundete Stoß- und Ziehfläche (718) aufweist, wobei die Schräg- bzw. Schneidfläche (716) und die Stoß- und Ziehfläche (718) sich an einer ringförmigen Stirnkante (720) am freien Stirnende des Stanz- und/oder Nietabschnitts (704) treffen,
**dadurch gekennzeichnet**
**dass** die konusförmige Schräg- bzw. Schneidfläche (716) die Hypotenuse eines gedachten reckeckigen Dreiecks bildet mit einer Schenkellänge senkrecht zur mittleren Längsachse (726) des rohrförmigen Stanz- und/ oder Nietabschnitts (204) von 0,10 mm ± 0,03 mm, dass die radiale Wanddicke (R) des rohrförmigen Stanzund/ oder Nietabschnitts (704) als Funktion der effektiven Größe des Befestigungsabschnittes bemessen ist,
**dass** die gerundete Stoß- und Ziehfläche (718) einen Krümmungsradius (r) aufweist, der 0,1 mm ± 0,03 mm kleiner ist als die jeweilige radiale Wanddicke (R) und dass der Krümmungsmittelpunkt (727) der gerundeten Stoß- und Ziehfläche (718) an der Oberfläche eines gedachten achsparallelen Zylinders (728) liegt, der sich von der ringförmige Stirnkante (720) weg in Richtung des Befestigungsabschnittes (702) erstreckt und an einer Stelle entlang des Stanz- und/oder Nietabschnittes (704) an der Oberfläche des gedachten achsparallelen Zylinders (728) so gelegt ist, dass eine Tangente (730) zu der gerundeten Stoß- und Ziehfläche (718) an der ringförmigen Stirnkante (720) senkrecht zur mittleren Längsachse (726) steht.

2. Befestigungselement nach Anspruch 1,
**dadurch gekennzeichnet, dass** die radiale Wanddicke (R) des rohrförmigen Stanz- und/oder Nietabschnitts (704) als Funktion der effektiven Größe des Befestigungsabschnittes wie folgt bemessen
ist: Größe von 5 mm R = 1,25 ± 0,05 mm
Größe von 6 mm R = 1,25 ± 0,05 mm
Größe von 8 mm R = 1,50 ± 0,05 mm
Größe von 10 mm R = 1,82 ± 0,05 mm.

3. Befestigungselement nach Anspruch 1 oder 2,
**dadurch gekennzeichnet,**
**dass** es sich um ein Bolzenelement handelt und der Befestigungsabschnitt mit einem Gewindezylinder versehen oder versehbar ist, dessen Außendurchmesser die effektive Größe des Befestigungsabschnitts bildet.

4. Befestigungselement nach Anspruch 1 oder 2,
**dadurch gekennzeichnet, dass** der Befestigungsabschnitt sich als Schaftteil darstellt, beispielsweise zur Aufnahme einer drehbaren Lagerung, oder mit Formmerkmalen zur Bildung einer Schnappverbindung oder mit einer Aufnahme für eine Federklammer, wobei der Außendurchmesser des Schaftteils die effektive Größe des Befestigungsabschnitts bildet.

5. Befestigungselement nach Anspruch 1 oder 2,
**dadurch gekennzeichnet, dass** es sich um ein Mutterelement handelt, bei dem der Befestigungsabschnitt eine Bohrung aufweist, die mit einem Innengewinde versehen ist oder zur Bildung eines Innengewindes gedacht ist, beispielsweise unter Anwendung einer gewindeschneidenden oder gewindeformenden Schraube, wobei der Außendurchmesser des Gewindezylinders die effektive Größe des Befestigungsabschnitts bestimmt bzw. dieser entspricht.

6. Befestigungselement nach Anspruch 1 oder 2,
**dadurch gekennzeichnet**
**dass** es sich um ein hohles Element handelt, das zur Aufnahme einer drehbaren Welle im Befestigungsabschnitt eine Bohrung aufweist, wobei der Durchmesser der Bohrung die effektive Größe des Befestigungsabschnitts bestimmt.

7. Befestigungselement nach Anspruch 1 oder 2,
**dadurch gekennzeichnet**
**dass** es sich um ein hohles Element handelt, das zur Aufnahme einer Klippbefestigung eine Bohrung aufweist und der Durchmesser der Bohrung die effektive Größe des Befestigungsabschnitts bestimmt.

## Claims

1. Fastener element (700) having a fastener section (702) and a tubular piercing and/or rivet section (704), with the piercing and/or rivet section being designed for the attachment of the fastener element to a sheet metal part and with the fastener section being designed for the attachment of an article to the sheet metal part, wherein, in the region of the transition from the fastener section (702) into the piercing and/or rivet section a radially and/or conically extending contact surface (708) is provided which optionally has features (710, 712) providing security against rotation and the tubular piercing and/or rivet section has, at its free end (714) on the radially inner side, a conical inclined surface or cutting surface (716) which diverges in the direction of the free end and, at the radially outer side, a rounded pressing and drawing surface (718), with the inclined surface or cutting surface (716) and the pressing and drawing surface (718) meeting at a ring-like end edge (720) at the free end of the piercing and/or rivet section (704),
**characterized in that**
the conical inclined surface or cutting surface (716) forms the hypotenuse of an imaginary right angled triangle with a limb length perpendicular to the central longitudinal axis (726) of the tubular piercing and/or rivet section (204) of 0.10 mm ± 0.03 mm, **in that** the radial wall thickness (R) of the tubular piercing and/or rivet section (704) is dimensioned as a function of the effective size of the fastener section;
**in that** the rounded pressing and drawing surface (718) has a radius of curvature (r) which is 0.1 mm ± 0.03 mm smaller than the respective radial wall thickness (R) and **in that** the centre of curvature (727) of the rounded pressing and drawing surface (718) lies on the surface of an imaginary cylinder (728) parallel to the axis which extends away from the ring-like end edge (720) in the direction of the fastener section (702) and is so positioned at a point along the piercing and/or riveting section (704) on the surface of the imaginary axially parallel cylinder (728) that a tangent (730) to the rounded pressing and drawing surface (718) stands at the ring-like end edge (720) perpendicular to the central longitudinal axis (726).

2. Fastener element in accordance with claim 1,
**characterized in that** the radial wall thickness (R) of the tubular piercing and/or rivet section (704) is dimensioned as follows as a function of the effective size of the fastener section:
size of 5 mm R = 1.25 ± 0.05 mm
size of 6 mm R = 1.25 ± 0.05 mm
size of 8 mm R = 1.50 ± 0.05 mm
size of 10 mm R = 1.82 ± 0.05 mm.

3. Fastener element in accordance with claim 1 or claim 2,
**characterized in that** it is a bolt element and the fastener section is provided with a thread cylinder, or can be provided with a thread cylinder, the outer diameter of which forms the effective size of the fastener section.

4. Fastener element in accordance with claim 1 or claim 2,
**characterized in that** the fastener section is realized as a shaft part, for example to receive a rotatable journal or is provided with features of shape for the formation of a snap connection or with a mount for a spring clip, with the outer diameter of the shaft part forming the effective size of the fastener section.

5. Fastener element in accordance with claim 1 or claim 2,
**characterized in that** it is a nut element in which the fastener section has a bore which is provided with an internal thread or is intended for the formation of an internal thread, for example utilizing a thread cutting or thread forming screw, with the outer diameter of the thread cylinder determining the effective size of the fastener section or corresponding to the latter.

6. Fastener element in accordance with claim 1 or claim 2,
**characterized in that** it is a hollow element which has a bore for the reception of a rotatable shaft in the fastener section, with the diameter of the bore determining the effective size of the fastener section.

7. Fastener element in accordance with claim 1 or claim 2,
**characterized in that** it is a hollow element which has a bore to receive a clip mounting and **in that** the diameter of the bore determines the effective size of the fastener section.

## Revendications

1. Elément de fixation (700) comportant un tronçon de fixation (702) et un tronçon d'estampage et/ou de rivetage tubulaire (704), le tronçon d'estampage et/ou de rivetage étant conçu pour la fixation de l'élément de fixation sur une pièce de tôle, et le tronçon de fixation étant conçu pour la fixation d'un objet sur la pièce de tôle, une surface d'appui (708) s'étendant radialement et/ou en forme de cône, comportant le cas échéant des marques de blocage en rotation (710, 712), étant prévue dans la zone de transition entre le tronçon de fixation (702) et le tronçon d'estampage et/ou de rivetage, et le tronçon d'estampage et/ou de rivetage tubulaire comportant au niveau de son extrémité frontale libre (714) sur la face radiale intérieure une surface oblique ou de découpe conique (716), qui diverge en direction de l'extrémité frontale libre, et sur la face radiale extérieure une surface de poussée et d'emboutissage arrondie (718), la surface oblique ou de découpe (716) et la surface de poussée et d'emboutissage (718) se rejoignant au niveau d'une arête frontale annulaire (720) de l'extrémité frontale libre du tronçon d'estampage et/ou de rivetage (704),
**caractérisé en ce que**
la surface oblique ou de découpe conique (716) forme l'hypoténuse d'un triangle rectangle théorique avec une longueur de côté perpendiculairement à l'axe longitudinal médian (726) du tronçon d'estampage et/ou de rivetage tubulaire (204) de 0,10 mm ± 0,03 mm, **en ce que** l'épaisseur de paroi radiale (R) du tronçon d'estampage et/ou de rivetage tubulaire (704) est dimensionnée en tant que fonction de la dimension effective du tronçon de fixation,
**en ce que** la surface de poussée et d'emboutissage arrondie (718) comporte un rayon de courbure (r) qui est de 0,1 mm ± 0,03 mm inférieur à l'épaisseur de paroi radiale (R) respective, et **en ce que** le point central de courbure (727) de la surface de poussée et d'emboutissage arrondie (718) se situe à la surface d'un cylindre théorique à axe parallèle (728), qui s'étend à partir de l'arête frontale annulaire (720) en direction du tronçon de fixation (702), et qui est situé le long du tronçon d'estampage et/ou de rivetage (704) à un emplacement de la surface du cylindre théorique à axe parallèle (728) de telle sorte que, au niveau de l'arête frontale annulaire (720), une tangente (730) à la surface de poussée et d'emboutissage (718) est perpendiculaire à l'axe longitudinal médian (726).

2. Elément de fixation selon la revendication 1,
**caractérisé en ce que**, en tant que fonction de la dimension effective du tronçon de fixation, l'épaisseur de paroi radiale (R) du tronçon d'estampage et/ou de rivetage tubulaire (704) est dimensionnée comme suit :
dimension de 5 mm R = 1,25 ± 0,05 mm
dimension de 6 mm R = 1,25 ± 0,05 mm
dimension de 8 mm R = 1,50 ± 0,05 mm
dimension de 10 mm R = 1,82 ± 0,05 mm

3. Elément de fixation selon la revendication 1 ou 2,
**caractérisé en ce qu'**il s'agit d'un élément de boulon, et **en ce que** le tronçon de fixation est muni ou peut être muni d'un cylindre fileté, dont le diamètre extérieur constitue la dimension effective du tronçon de fixation.

4. Elément de fixation selon la revendication 1 ou 2,
**caractérisé en ce que** le tronçon de fixation se présente en tant qu'élément de tige, par exemple pour la réception d'un palier rotatif, ou comporte des marques de forme pour la réalisation d'une liaison par encliquetage ou un logement pour un étrier de ressort, le diamètre extérieur de l'élément de tige constituant la dimension effective du tronçon de fixation.

5. Elément de fixation selon la revendication 1 ou 2,
**caractérisé en ce qu'**il s'agit d'un élément d'écrou, dont le tronçon de fixation comporte un alésage qui est muni d'un taraudage ou conçu pour la réalisation d'un taraudage, par exemple en utilisant une vis taraudeuse ou formant des filets, le diamètre extérieur du cylindre fileté définissant ou correspondant à la dimension effective du tronçon de fixation.

6. Elément de fixation selon la revendication 1 ou 2,
**caractérisé en ce qu'**il s'agit d'un élément creux, qui comporte un alésage dans le tronçon de fixation pour la réception d'un arbre rotatif, le diamètre de l'alésage définissant la dimension effective du tronçon de fixation.

7. Elément de fixation selon la revendication 1 ou 2,
**caractérisé en ce qu'**il s'agit d'un élément creux, qui comporte un alésage pour la réception d'une fixation agrafée, et le diamètre de l'alésage définissant la dimension effective du tronçon de fixation.
